# EUROPÄISCHE PATENTSCHRIFT

(11) **EP 1 866 196 B1**
(45) Veröffentlichungstag und Bekanntmachung des Hinweises auf die Patenterteilung: **29.10.2008**
(21) Anmeldenummer: 06723812.1
(22) Anmeldetag: 29.03.2006
(51) Int. Cl.: B62D 5/04, F16H 55/24

(54) **ELEKTROMECHANISCHE SERVOLENKUNG**
ELECTROMECHANICAL POWER ASSISTED STEERING SYSTEM
SERVODIRECTION ELECTROMECANIQUE

(30) Priorität: 04.04.2005 DE 102005015451
(43) Veröffentlichungstag der Anmeldung: 19.12.2007
(73) Patentinhaber: ThyssenKrupp Presta AG, 9492 Eschen (LI)
(72) Erfinder: STAUDENMANN, Christian, 9470 Buchs (CH); STROBEL, Joseph-Léon, 9493 Mauren (LI); KIFORIUK, Alexander, 73061 Ebersbach an der Fils (DE)
(74) Vertreter: Gerber, Wolfram
(86) Internationale Anmeldenummer: PCT/EP2006/002843
(87) Internationale Veröffentlichungsnummer: WO 2006/105900

(56) Entgegenhaltungen:
- EP-A- 1 416 180
- EP-B- 1 087 883
- US-A1- 2005 121 251
- PATENT ABSTRACTS OF JAPAN Bd. 2000, Nr. 11, 3. Januar 2001 (2001-01-03) -& JP 2000 211537 A (TOYOTA MOTOR CORP), 2. August 2000 (2000-08-02)

## Beschreibung

Die vorliegende Erfindung betrifft ein Lenksystem mit Motor mit den Merkmalen des Oberbegriffs des Anspruchs 1.

Im Sinne der Erfindung sind Servolenkungen, insbesondere auch elektromechanische Servolenkungen, bei denen es eine betriebsmäßige mechanische Kopplung zwischen dem Steuerrad und der Verschwenkung der Räder gibt und Steer-by-wire-Lenksysteme, bei denen es keine betriebsmäßige mechanische Kopplung zwischen dem Steuerrad und der Verschwenkung der Räder gibt, mit dem Begriff Lenksystem umfasst. Weiterhin gilt dieses auch für sogenannte Überlagerungslenkungen.

Steer-by-wire-Lenkungen bzw. elektromechanische Servolenkungen sind aus der Praxis in verschiedenen Bauformen bekannt. Im Allgemeinen wird ein Elektromotor in einem Getriebegehäuse gelagert. Seine Abtriebswelle ist mit einer koaxialen Schneckenwelle entweder einteilig oder über eine Kupplung verbunden. Die Schneckenwelle kämmt mit einem Schneckenrad, welches zum Antrieb der Lenkung selbst verwendet wird. Unter Antrieb ist dabei das Aufprägen eines Drehmomentes zum Antrieb der Lenkung bzw. eines Hilfsmoments zur Reduktion der Handkraft, die der Fahrer am Lenkrad aufzubringen hat, zu verstehen. Eine Steuerung regelt über einen Drehmomentsensor und gegebenenfalls anderer Eingangsdaten die Größe des aufgeprägten Drehmoments. Das Drehmoment kann dabei in die Lenksäule oder in ein mit der Zahnstange kämmendes Lenkritzel eingebracht werden.

Es gibt Betriebszustände, in denen der Elektromotor nur geringe Momente bzw. keine Servounterstützung bereitstellen muss, beispielsweise bei einer schnellen Geradeausfahrt, in der die Lenkung mit geringen Kräften und Momenten um die Mittellage pendelt. In diesen Betriebszuständen wird der Elektromotor, der über das Getriebe zwangsweise mit der Lenkung gekoppelt ist, mit schnellen wechselseitigen Bewegungen mit geringer Amplitude angesteuert.

Wenn der Eingriff zwischen der Schneckenwelle und dem Schneckenrad ein Spiel aufweist, kommt es bei dem zuletzt beschriebenen Betriebszustand ebenso wie bei jedem Lastrichtungswechsel zu Geräuschen im Eingriff. Es gibt deshalb zahlreiche Vorschläge, die beiden Getriebeelemente mit Vorspannung in Eingriff zu bringen. Allen Vorschlägen ist gemeinsam, dass die Schneckenwelle an beiden Enden gelagert ist, dass die Vorspannung der Schneckenwelle in Richtung auf das Schneckenrad durch eine Vorspannung des motorfernen Lagers der Schneckenwelle erfolgt, und dass eine Vorkehrung für den dadurch entstandenen Winkelversatz der Drehachse der Schneckenwelle vorgesehen ist.

Aus der DE 102 018 66 A1 ist beispielsweise eine derartige Servolenkanlage bekannt, bei der die Schneckenwelle im motornahen Lagersitz in einem Kugellager gelagert ist, während das motorferne Lager ein Nadellager ist, welches in Richtung des Schneckenrades von einer Schraubenfeder vorgespannt ist. Die Vorspannung des motorfernen Lagers und die dadurch ermöglichte Beweglichkeit der Schneckenwelle in Radialrichtung bewirkt eine mögliche Verschränkung der Drehachsen des Motors einerseits und der Schneckenwelle andererseits. Diese Verschränkung wird in einer elastischen Kupplung aufgefangen, die aus zwei konzentrischen Kupplungsgliedern mit einem dazwischen angeordneten elastischen Körper aus Kautschuk oder der gleichen versehen ist.

In Druckschrift EP 1 087 883 B1 ist ebenfalls ein Getriebe für eine elektromechanische Servolenkung dargestellt, bei dem ein Elektromotor eine koaxiale Schneckenwelle antreibt. Die Schneckenwelle ist beidseitig in Kugellagern gelagert. Das motorferne Lager der Schneckenwelle ist durch eine Blattfeder in Richtung auf das Schneckenrad vorgespannt. Der Anker des Motors ist nur an der der Schneckenwelle abgewandten Seite in einem Kugellager gelagert. Das an die Schneckenwelle angrenzende Enden der Motorwelle ist mit der Schneckenwelle über eine elastische Kupplung Verbunden, die nach Art einer Klauenkupplung mit zwischen den Klauen liegendem Elastomer aufgebaut ist. Die Klauenkupplung erlaubt eine Verschränkung der beiden Drehachsen zueinander. Der mögliche Versatz der Achsen gegeneinander in Radialrichtung im Bereich der Kupplung ist durch die Ausgestaltung der Kupplung beschränkt.

Der gattungsbildende Stand der Technik ist in dem Dokument JP2000211537A dargestellt. Den technischen Lösungen in den oben genannten Dokumenten ist gemeinsam, dass die Anfederung und die Einstellung der Schneckenwelle an dem motorfernen Lager vorgenommen wird und dass die Kupplung zwischen dem Motor und Schneckenwelle über eine separate und elastische Kupplung erfolgt, deren Aufgabe es ist, den Winkelversatz zwischen Schneckenwelle und Motorwelle auszugleichen. Diese Lösungen sind aufwendig.

Es ist deshalb Aufgabe der vorliegenden Erfindung, ein Lenksystem mit einem Motor zu schaffen, bei dem die Spielfreiheit des Eingriffs zwischen der Schneckenwelle und dem motorgetriebenen Schneckenrad auf einfachere Weise gewährleistet ist.

Diese Aufgabe wird von einem Lenksystem mit den Merkmalen des Anspruchs 1 gelöst. Dabei ist es sogar unerheblich, ob der Motor als Elektromotor oder als hydraulischer oder als pneumatischer Motor ausgebildet ist.

Die Aufgabe wird gelöst durch ein Lenksystem mit einem Motor, wobei das Lenksystem als Servolenkung und der Motor als Servomotor oder das Lenksystem als Steer-by-wire-Lenksystem und der Motor als Antriebsmotor ausgelegt ist, und der Motor über eine Motorwelle und eine Ausgleichskupplung mit einer Schneckenwelle antriebsmäßig verbunden ist, wobei die Schneckenwelle mit einem Schneckenrad kämmt und wobei der Motor, die Schneckenwelle und das Schneckenrad in einem Getriebegehäuse gelagert sind und die Motorwelle und die Schneckenwelle jeweils eine Drehachse definieren, **wobei erfindungsgemäss**
- die Motorwelle mit jeweils einem kupplungsnahen Motorlager und einem kupplungsfernen Motorlager in einem bezüglich dem Getriebegehäuse verlagerbaren Teilgehäuse gelagert ist,
- der Motor mit dem Teilgehäuse in Radialrichtung seiner Drehachse lagejustierbar ist,
- die Schneckenwelle an ihrem kupplungsfernen Ende in einem Lager und an ihrem kupplungsnahen Ende in der Kupplung gelagert ist.

Weil die Motorwelle mit jeweils einem kupplungsnahen Motorlager und einem kupplungsfernen Motorlager in einem bezüglich dem Getriebegehäuse verlagerbaren Teilgehäuse gelagert ist, der Motor mit dem Teilgehäuse zumindest in Radialrichtung zu seiner Drehachse lagejustierbar ist und die Schneckenwelle an ihrem kupplungsfernen Ende in einem Lager und an ihrem kupplungsnahen Ende in der Kupplung gelagert ist, kann eine Zustellung der Schneckenwelle auf den Eingriff mit dem Schneckenrad derart erfolgen, dass die entstehenden Radialkräfte und die Geometrieveränderung der Drehachsen des Motors und der Schneckenwelle allein in der Kupplung aufgefangen werden. Insbesondere ist die Kupplung derart ausgebildet, dass sie den Winkelversatz und/oder den Achsversatz zwischen der Schneckenwelle und der Motorwelle ausgleicht und gleichzeitig eine resultierende Kraft auf die Schneckenwelle in Richtung des Schneckenrades aufbringt. Dabei kann die Kraft durch elastische Elemente und/oder durch die rotierende Bewegung der Motorwelle aufgebracht sein.

Eine einfache und werksseitig fixierbare Einstellmöglichkeit des Eingriffs kann vorsehen, dass das Teilgehäuse an dem Getriebegehäuse in einem verdrehbaren, gegenüber der Motorwelle exzentrischen Sitz gelagert ist. Dabei ist es ausreichend, wenn das Teilgehäuse an dem Getriebegehäuse einen Justierbereich in Radialrichtung von weniger als 1 mm aufweist. Der exzentrische Sitz kann als Hülse ausgeführt sein, die einerseits in dem Teilgehäuse und andererseits in dem Getriebegehäuse drehbar gelagert ist.

Die Ausgleichskupplung kann eine drehstarre Kupplung sein, beispielsweise von der Bauart einer Kreuzschlitzkupplung (Oldhamkupplung). Toleranzen im Rundlauf des Schneckenrades können durch eine elastische Ausgleichskupplung aufgefangen werden, deren elastisches Element eine Anfederung der Schneckenwelle auf das Schneckenrad ermöglicht.

Wenn die Kupplung eine Klauenkupplung mit einem zwischen den Klauen einliegende druckelastischen Elastomer ist, ist eine weitgehend drehsteife Verbindung mit nur geringen relativen Verdrehwinkeln gewährleistet, so dass die Verbindung Motorwelle - Schneckenwelle - Schneckenrad ohne nachteilige Phasendifferenzen in der Drehrichtungsumkehr bleibt.

Die Motorlager können in bewährter Weise als RadialRillenkugellager ausgeführt sein. Auf aufwendige Lager mit Anfederungselementen kann verzichtet werden.

Nachfolgend wird ein Ausführungsbeispiel der vorliegenden Erfindung anhand der schematischen Zeichnung beschrieben. Es zeigen:
- Fig. 1:: eine erfindungsgemäße Servolenkung in einer Seitenansicht in Richtung der Drehachse des Schneckenrades;
- Fig. 2:: die Servolenkung aus Fig. 1 in einer um 90° gedrehten Seitenansicht;
- Fig. 3:: die Servolenkung in einer Ansicht gemäß Fig. 1 in einem Querschnitt entlang der Drehachse des Elektromotors;
- Fig. 4:: die Servolenkung in einer Ansicht gemäß Fig. 2 in einem Querschnitt entlang der Drehachse des Elektromotors;
- Fig. 5:: die Servolenkung in einem Schnitt entlang der Linie V - V aus Fig. 2; sowie
- Fig. 6:: ein elastisches Kupplungselements zur Verbindung der Motorwelle und der Schneckenwelle in einer perspektivischen Darstellung.

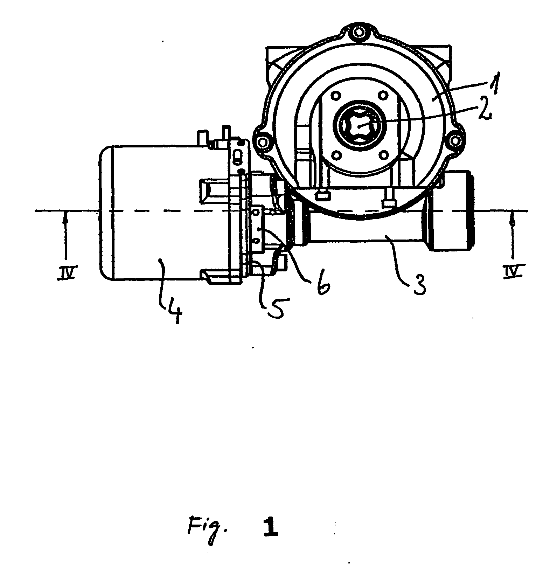

Die Figur 1 zeigt eine erfindungsgemäße Servolenkung in einer Seitenansicht. Es handelt sich hierbei um eine Ausführungsform als elektromechanische Servolenkung, bei der die Lenksäule durch den Servomotor angetrieben wird. Diese Bauart wird Coloumn-Drive genannt. Im Einzelnen zeigt die Figur 1 das Getriebe der Servolenkung mit einem Getriebegehäuse 1, in dem eine Lenksäule 2 drehbar gelagert ist. In dem Getriebegehäuse 1 ist ein Schneckenrad gelagert, das koaxial drehfest mit der Lenksäule 2 verbunden ist. Das Schneckenrad kämmt mit einer in einem Gehäusebereich 3 angeordneten Schneckenwelle. Diese steht wiederum antriebsmäßig in Verbindung mit einem elektrischen Servomotor, der in einem Teilgehäuse 4 angeordnet ist. Das Teilgehäuse 4 ist gegenüber dem Gehäusebereich 3 in Radialrichtung der Schneckenwelle justierbar angeordnet. Zu diesem Zweck ist ein Flansch 5 vorgesehen, in dem eine Exzenterhülse 6 die Verbindung und die radiale Einstellung des Teilgehäuses 4 gegenüber dem Gehäusebereich 3 ermöglicht.

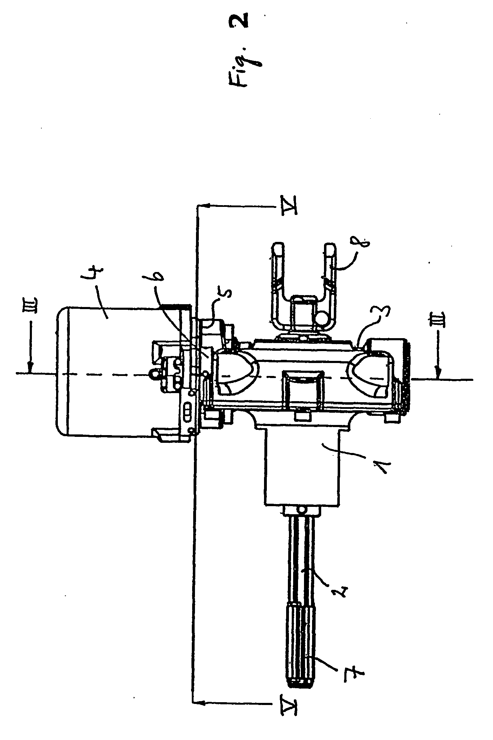

Die Figur 2 zeigt die Servolenkung nach Figur 1 in einer um 90° gedrehten Seitenansicht. Gleiche Bauelemente tragen gleiche Bezugsziffern. In dieser Ansicht ist die Lenksäule 2 in ihrer Seitenansicht sichtbar. Es handelt sich um einen Abschnitt der gesamten Lenksäule, der einerseits mit einem Vielzahn 7 zur drehfesten Verbindung mit einem Lenkrad und andererseits mit einer Gabel 8 zur kardanischen Verbindung mit der Eingangswelle eines an sich bekannten Lenkgetriebes, z.B. von der Bauart einer Zahnstangenlenkung, versehen ist.

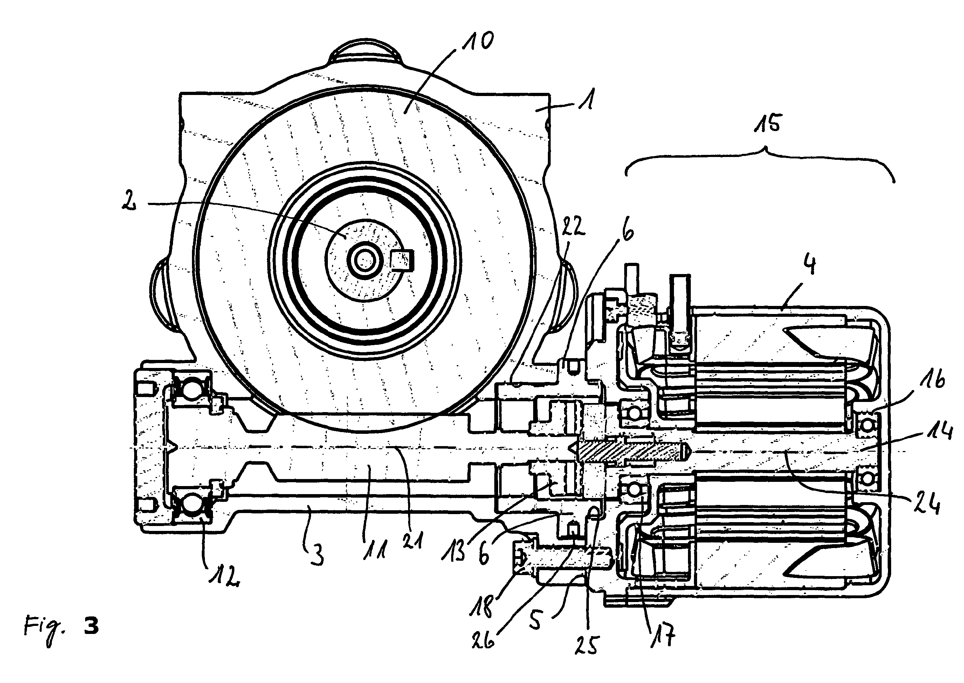

In der Figur 3 ist die Servolenkung aus Figur 1 und 2 in einem Querschnitt entlang der Linie III-III aus Figur 2 dargestellt. Ein Schneckenrad 10 ist in an sich bekannter Weise mit der Lenksäule 2 drehfest verbunden und über die Lenksäule mittelbar in dem Gehäuse 1 gelagert. Das Schneckenrad 10 kämmt mit einer Schneckenwelle 11, die an ihrem freien Ende in einem Radial-Rillenkugellager 12 gelagert ist. An ihrem dem Kugellager 12 gegenüber liegenden Ende ist die Lenkwelle 11 über eine Kupplung 13 mit einer Motorwelle 14 eines insgesamt mit 15 bezeichneten Servomotors antriebsmäßig gekoppelt. Die Motorwelle 14 ist in einem kupplungsfernen Kugellager 16 und einem kupplungsnahen Kugellager 17 in dem Teilgehäuse 4 gelagert.

Gewindeschrauben 18 sichern das Teilgehäuse 4 an dem Getriebegehäuse 3 im Bereich des Flansches 5. Parallel zu der Ebene des Flansches 5, also radial zur Motorwelle 14, ist das Teilgehäuse 4 in einem geringen Maß gegenüber dem Getriebegehäuse 3 justierbar. Die Exzenterhülse 6 ist hierzu einerseits exzentrisch zu einer Drehachse 21 der Schneckenwelle 11 in einer Bohrung 22 des Getriebegehäuses 3 gelagert. Andererseits ist die Exzenterhülse 6 konzentrisch zu der Motorwelle 14, die eine zweite Drehachse 24 definiert, in einer entsprechenden Bohrung 25 des Teilgehäuses 4 gelagert. Die Exzenterhülse 6 weist eine Anzahl von Sackbohrungen 26 auf, die mit einem Stift- oder Hakenschlüssel zur Drehung der Exzenterhülse 6 ergriffen werden können.

In einer alternativen Ausführungsform kann anstelle der Sackbohrungen 26 auch ein Sechskant oder eine andere Form zum Eingriff eines Werkzeuges, wie beispielsweise ein Schraubenschlüssel, am Außenumfang vorgesehen sein.

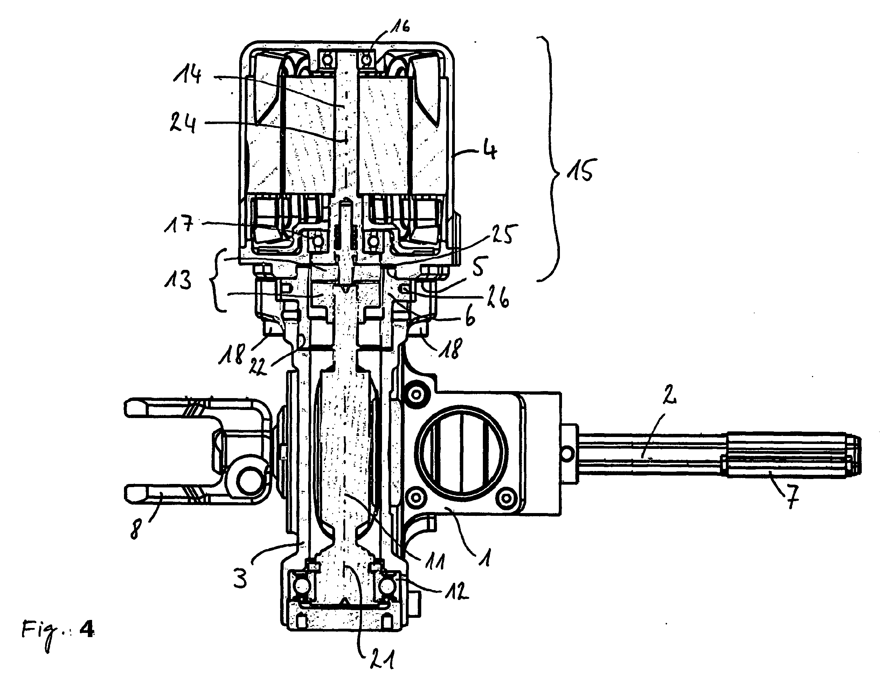

Die Figur 4 zeigt die in soweit beschriebene Servolenkung in einem Querschnitt entlang der Linie IV-IV aus Figur 1. In dieser Betrachtungsrichtung liegt der Eingriff zwischen der Schneckenwelle 11 und dem Schneckenrad 10 unterhalb der Schneckenwelle 11 verdeckt durch die Schneckenwelle 11 und ist in der Figur 4 nicht sichtbar. Für eine Zustellung der Schneckenwelle 11 auf das Schneckenrad 10 zu muss die Schneckenwelle 11 im Bereich des Eingriffs senkrecht zur Zeichenebene verlagert werden. Die Flucht der beiden Drehachsen 21 und 24 wird dadurch nicht geändert.

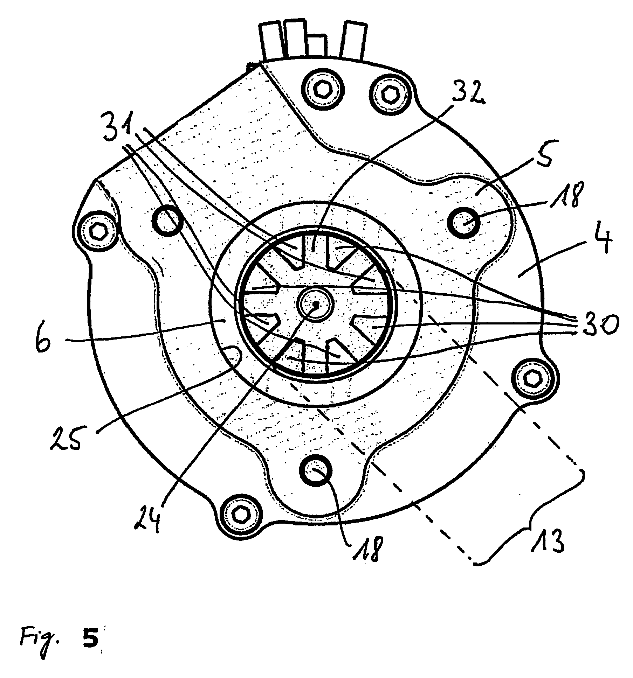

Die Figur 5 zeigt einen weiteren Querschnitt durch die Servolenkung entlang der Linie V-V aus Figur 2 der Schnitt verläuft durch den Flansch 5, der in dieser Darstellung mit der Zeichenebenen zusammenfällt.

Die Figur 5 zeigt, wie die Exzenterhülse 6 in die Bohrung 25 eingesetzt ist und das sich die Kupplung 13 und die mit der Kupplung koaxiale Motorwelle konzentrisch zu der Exzenterhülse 6 befinden. Die Kupplung 13 ist im Wesentlichen dreiteilig. Der erste Teil ist eine Anordnung von vier Klauen 30, die in einem Winkelabstand von jeweils 90° um die Drehachse 24 der Motorwelle angeordnet sind. Der zweite Teil wird gebildet von ebenfalls vier Klauen 31, die mit der Schneckenwelle 11 verbunden sind und in einem Winkelabstand von ebenfalls 90° um die Drehachse 21 der Schneckenwelle 11 angeordnet sind. Das dritte Element der Klauenkupplung ist ein sternförmiges elastisches Kupplungselement 32, dass den Zwischenraum zwischen den Klauen 30 und 31 ausfüllt.

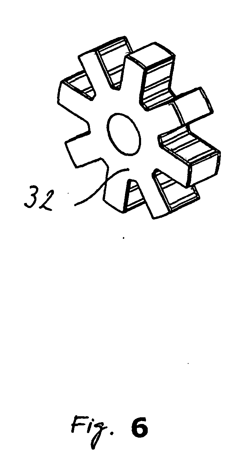

Das elastische Kupplungselement 32 ist in der Figur 6 perspektivisch dargestellt. Das elastische Kupplungselement wird bevorzugt durch ein Elastomer gebildet. Es können aber auch Kunststoff- oder federnde Metallelemente eingesetzt werden.

Die Funktionsweise der in soweit beschriebenen Servolenkung lässt sich anhand der Figur 3 beschreiben. In dieser Figur ist der Eingriff des Schneckenrades 10 und der Schneckenwelle 11 als Überlappung der beiden Bauelemente dargestellt. Die beiden Bauelemente bilden ein Schneckenradgetriebe. Wie im Stand der Technik soll eine solches Getriebe spielfrei sein, um im Lastwechselfall keine Geräusche zu produzieren. Zu diesem Zweck ist die Schneckenwelle 11 in Richtung auf das Schneckenrad 10 verlagerbar, und zwar in diesem Ausführungsbeispiel sowohl einstellbar als auch elastisch angefedert.

Die Kupplung 13 zwischen der Motorwelle 14 und der Schneckenwelle 11 ist grundsätzlich vom Typ der Ausgleichskupplungen und in diesem speziellen Fall von der Bauart einer elastischen Klauenkupplung, die eine Winkeldifferenz zwischen den beiden Drehachsen 21 und 24, einen Achsversatz und gegebenenfalls auch ein axiales Spiel auszugleichen vermag. Die Schneckenwelle 11 ist in der Kupplung 13 fliegend gelagert.

Um ein dauerhaft spielfreies Getriebe zu erreichen, geht man bei der Montage derart vor, dass zunächst in dem Getriebegehäuse 3 die Lenksäule 2, das Schneckenrad 10 und die Schneckenwelle 11 mit den dazugehörigen Lagern montiert wird. Die Exzenterhülse 6 wird in die exzentrische Bohrung 22 eingesetzt. So dann wird der Servomotor 15 mit seinem Teilgehäuse 4 montiert. Die motorseitige Klaue 30 wird drehfest mit der Motorwelle 14 verbunden oder ist einstückig an dieser Motorwelle angeformt. Die der Schneckenwelle 11 zugeordnete Klaue 31 wird auf der Schneckenwelle befestigt. Dann wird das elastische Kupplungselement, bevorzugt das Elastomer 32 auf eine der beiden Klauen aufgesetzt und das Teilgehäuse 4 im Bereich des Flansches 5 derart auf das Getriebegehäuse 3 aufgesetzt, dass die Exzenterhülse 6 in die konzentrisch zur Motorwelle 14 ausgerichtete Bohrung 25 des Teilgehäuses 4 eingeführt werden kann und dass die jeweils andere Klaue der Kupplung 13 in die verbleibenden Zwischenräume des Elastomers 32 eingreift. Die drei Gewindeschrauben 18 können dann zunächst soweit in das Teilgehäuse 4 eingeschraubt werden, dass der Motor im Flansch 5 gerade noch verschieblich gegenüber dem Getriebegehäuse 3 ist. Um dies zu ermöglichen, sind die von den Gewindeschrauben 18 durchsetzten Durchgangsbohrungen des Getriebegehäuses 3 im Durchmesser entsprechend vergrößert oder als Langlöcher ausgebildet.

Eine Drehung der Exzenterhülse 6 bewirkt nun eine Parallelverschiebung der Drehachse 24 der Motorwelle 14 und die Kupplung 13 nimmt dabei das fliegend gelagerte Ende der Schneckenwelle 11 mit. Die Schneckenwelle 11 ist in dem Radialkugellager 12 andererseits fest in dem Getriebegehäuse 3 gelagert, so dass sich die Neigung der Drehachse 21 der Schneckenwelle 11 ändert.

Zur Justage des Getriebes wird nun der Elektromotor 15 mit Strom beaufschlagt und so zur Drehung der Motorwelle veranlasst. Diese nimmt über die Kupplung 13 die Schneckenwelle 11 mit und dreht über den Eingriff der Verzahnung das Schneckenrad 10. Mit einem Hakenschlüssel, der in die Bohrungen 26 der Exzenterhülse 6 eingreift, wird diese in den Bohrungen 22 und 25 gedreht. Die Schneckenwelle 11 wird dadurch je nach Stellung der Exzenterhülse 6 näher an das Schneckenrad 10 gebracht oder von dem Schneckenrad 10 entfernt. Eine Messung der Stromaufnahme des Elektromotors 15 oder eine alternative Messung des Antriebsmomentes der Schneckenwelle 11 gibt bei diesem Verfahren einen Hinweis auf die im Getriebe entstehende Reibung. Eine optimale Einstellung des Eingriffs über die Exzenterhülse 6 liegt je nach konkreter Ausführung des Getriebes etwa in dem Bereich, in dem die Reibung anzusteigen beginnt, was durch eine zunehmende Stromaufnahme des Elektromotors 15 erkennbar ist. Getriebe dieser Bauart sind nicht unbedingt symmetrisch hinsichtlich der Drehrichtung. Deshalb ist es bevorzugt, die Einstellung des Eingriffs zwischen der Schneckenwelle 11 und dem Schneckenrad 10 derart vorzunehmen, dass beide Drehrichtungen des Elektromotors 15 berücksichtigt werden. Dazu wird die Drehrichtung intermittierend umgekehrt und für beide Drehrichtungen ein Kompromiss zwischen den beiden möglicherweise nicht übereinstimmenden optimalen Einstellungen der Exzenterhülse 6 gesucht.

Der durch die Exzentrizität der Exzenterhülse 6 ermöglicht Einstellbereich, also der Bereich, in dem das Teilgehäuse 4 gegenüber dem Getriebegehäuse 3 in der Ebene des Flansches 5 bewegt werden kann, kann im Rahmen der größten zu erwartenden Fertigungstoleranz für die Schneckenwelle 11 und das Schneckenrad 10 gewählt werden. Ein nutzbarer Einstellbereich von etwa +/- 0,1 mm dürfte in der Praxis ausreichen. Bei den in Figur 3 dargestellten Verhältnissen entspricht dies einer Winkeländerung der Drehachse 21 gegenüber der im Winkel unveränderten parallel verschobenen Drehachse 24 von weniger als 0,1°.

Derartige Winkelabweichungen sind praktisch von allen Ausgleichskupplungen dauerhaft zu bewältigen. Deshalb kommen für die Kupplung 13 auch nicht elastische drehstarre Ausgleichskupplungen wie beispielsweise die sogenannte Oldhamkupplung in Betracht. Vorteilhaft bei dem dargestellten Ausführungsbeispiel mit einer elastischen Klauenkupplung ist jedoch, dass nicht nur eine Einstellung der Lage der Schneckenwelle 11 in Bezug zu dem Schneckenrad 10 möglich wird, sondern dass die elastische Klauenkupplung 13 auch einen geringfügigen Achsversatz toleriert, der in dem Elastomer 32 aufgefangen wird und der für eine Anfederung der Schneckenwelle 11 in Richtung auf das Schneckenrad 10 ausgenutzt werden kann. Die Auswahl der Kupplung 13 kann sich auch je nach Anwendungsfall ändern. So ist das zu übertragende Drehmoment und die maximal zu erwartende Drehzahl der Motorwelle 14 zu berücksichtigen.

Es ist zu erwarten, dass die einmal gefundene Einstellung über die zu erwartende Betriebsdauer der Servolenkung die erforderliche Spielfreiheit gewährleistet. Insbesondere wir das Elastomer 32 kein "Setzen" entwickeln, da es nicht statisch in einer Richtung belastet wird, sondern die Lastrichtung im Betrieb ständig umläuft. Falls im Laufe der Zeit eine Geräuschentwicklung, die auf ein Spiel zwischen der Schneckenwelle 11 und dem Schneckenrad 10 schließen lässt, können die Schrauben 18 gelöst werden und die Spieleinstellung über die Exzenterhülse 6 erneut vorgenommen werden.

Es sind auch andere Einstellmöglichkeiten des Teilgehäuses 4 zu dem Getriebegehäuse 3 denkbar, so beispielsweise eine Parallelführung in Richtung des Flansches 5 in der Figur 3 von oben nach unten.

Allen Ausführungsformen ist gemeinsam, dass die Anfederung und der Ausgleich der Winkeldifferenz zwischen den beiden Drehachsen 21 und 24 und eines eventuellen Achsversatzes in Radialrichtung in einem Bauelement, nämlich der Ausgleichskupplung 13 erfolgt. Dies macht die gesamte Anordnung besonders kompakt und ermöglicht eine kostengünstige Konstruktion, da die Teilezahl reduziert wird. Die Einstellmöglichkeit durch Relativverschiebung des Teilgehäuses 4 und des Getriebegehäuses 3 ermöglicht eine Nachjustage im Reparaturfall.

## Patentansprüche

1. Lenksystem mit einem Motor (15), der über eine Motorwelle (14) und eine Ausgleichskupplung (13) mit einer Schneckenwelle (11) antriebsmäßig verbunden ist, wobei die Schneckenwelle (11) mit einem Schneckenrad (10) kämmt und wobei
- der Motor (15), die Schneckenwelle (11) und das Schneckenrad (10) in einem Getriebegehäuse (1) gelagert sind,
- die Motorwelle (14) und die Schneckenwelle (11) jeweils eine Drehachse (24, 21) definieren,
- die Motorwelle (14) mit jeweils einem kupplungsnahen Motorlager (17) und einem kupplungsfernen Motorlager (16) in einem bezüglich dem Getriebegehäuse (1) verlagerbaren Teilgehäuse (4) gelagert ist, und
- die Schneckenwelle (11) an ihrem kupplungsfernen Ende in einem Lager (12) und an ihrem kupplungsnahen Ende in der Kupplung (13) gelagert ist,
**dadurch gekennzeichnet, dass**
- der Motor (15) mit dem Teilgehäuse (4) in Radialrichtung seiner Drehachse (24) lagejustierbar ist.

2. Servolenkung nach Anspruch 1, **dadurch gekennzeichnet, dass** das Teilgehäuse (4) an dem Getriebegehäuse (1) in einem drehbaren, gegenüber der Motorwelle (14) exzentrischen Sitz (22) gelagert ist.

3. Servolenkung nach Anspruch 2, **dadurch gekennzeichnet, dass** der Sitz (22) mit einer Exzenterhülse (6) zusammenwirkend ausgebildet ist, die bei drehfest, aber radial verschieblich montiertem Teilgehäuse (4) von außen drehbar ist.

4. Servolenkung nach einem der vorhergehenden Ansprüche, **dadurch gekennzeichnet, dass** das Teilgehäuse (4) an dem Getriebegehäuse (1) einen Justierbereich in Radialrichtung von weniger als 1 mm aufweist.

5. Servolenkung nach einem der vorhergehenden Ansprüche, **dadurch gekennzeichnet, dass** die Kupplung (13) eine drehstarre Ausgleichskupplung ist.

6. Servolenkung nach einem der vorhergehenden Ansprüche 1 bis 3, **dadurch gekennzeichnet, dass** die Kupplung (13) eine elastische Ausgleichskupplung ist.

7. Servolenkung nach Anspruch 6, **dadurch gekennzeichnet, dass** die Kupplung (13) eine Klauenkupplung mit einem zwischen den Klauen (30, 31) einliegenden druckelastischen Elastomer (32) ist.

## Claims

1. Steering system with a motor (15), which is connected by means of a motor shaft (14) and a flexible coupling (13) to a worm shaft (11) in a driving manner, wherein the worm shaft (11) meshes with a worm wheel (10) and wherein
- the motor (15), the worm shaft (11) and the worm wheel (10) are mounted in a gear housing (1),
- the motor shaft (14) and the worm shaft (11) in each case define an axis of rotation (24, 21),
- the motor shaft (14) is mounted in each case with a motor bearing (17) close to the coupling and a motor bearing (16) remote from the coupling in a part housing (4) capable of being displaced in relation to the gear housing (1), and
- the worm shaft (11) is mounted at its end remote from the coupling in a bearing (12) and at its end close to the coupling in the coupling (13),
**characterised in that**
- the motor (15) with the part housing (4) is position-adjustable in the radial direction of its axis of rotation (24).

2. Power steering system according to Claim 1, **characterised in that** the part housing (4) is mounted at the gear housing (1) in a rotatable eccentric seat (22) in relation to the motor shaft (14).

3. Power steering system according to Claim 2, **characterised in that** the seat (22) is designed to interact with an eccentric sleeve (6) which can be rotated from the outside with a part housing (4) mounted so as to be rotationally resistant but radially displaceable.

4. Power steering system according to any one of the preceding claims, **characterised in that** the part housing (4) has at the gear housing (1) an adjustment range in the radial direction of less than 1 mm.

5. Power steering system according to any one of the preceding claims, **characterised in that** the coupling (13) is a rotationally-rigid flexible coupling.

6. Power steering system according to any one of Claims 1 to 3, **characterised in that** the coupling (13) is an elastic flexible coupling.

7. Power steering system according to Claim 6, **characterised in that** the coupling (13) is a claw coupling with a pressure-elastic elastomer (32) located between the claws (30, 31).

## Revendications

1. Système de direction comprenant un moteur (15) qui est relié en termes d'entraînement à un arbre de vis sans fin (11) via un arbre moteur (14) et un coupleur de compensation (13), l'arbre de vis sans fin (11) étant en engrènement avec une vis tangente (10) et dans lequel
- le moteur (15), l'arbre de vis sans fin (11) et la vis tangente (10) sont montés dans un boîtier de transmission (1),
- l'arbre moteur (14) et l'arbre de vis sans fin (11) définissent chacun un axe de rotation (24, 21),
- l'arbre moteur (14) est monté, avec un palier moteur respectif (17) proche du coupleur et avec un palier moteur (16) éloigné du coupleur, dans un boîtier partiel (4) déplaçable par rapport au boîtier de transmission (1), et
- l'arbre de vis sans fin (11) est monté à son extrémité éloignée du coupleur dans un palier (12) et à son extrémité proche du coupleur dans le coupleur (13),
**caractérisé en ce que**
- le moteur (15) avec le boîtier partiel (4) est susceptible d'être ajusté en position en direction radiale de son axe de rotation (24).

2. Direction assistée selon la revendication 1, **caractérisée en ce que** le boîtier partiel (4) est monté sur le boîtier de transmission (1) dans un siège rotatif (22) excentré par rapport à l'arbre moteur (14).

3. Direction assistée selon la revendication 2, **caractérisée en ce que** le siège (22) est réalisé de façon à coopérer avec une douille excentrique (6) qui, lorsque le boîtier partiel (4) est monté solidairement en rotation mais radialement déplaçable, est susceptible d'être mise en rotation de l'extérieur.

4. Direction assistée selon l'une des revendications précédentes, **caractérisée en ce que** le boîtier partiel (4) présente sur le boîtier de transmission (1) une plage d'ajustement en direction radiale inférieure à 1 mm.

5. Direction assistée selon l'une des revendications précédentes, **caractérisée en ce que** le coupleur (13) est un coupleur de compensation rigide en rotation.

6. Direction assistée selon l'une des revendications précédentes 1 à 3, **caractérisée en ce que** le coupleur (13) est un coupleur de compensation élastique.

7. Direction assistée selon la revendication 6, **caractérisée en ce que** le coupleur (13) est un coupleur à griffes avec un élastomère (32) élastique vis-à-vis de la pression, inséré entre les griffes (30, 31).
